# EUROPÄISCHE PATENTSCHRIFT

(11) **EP 3 296 057 B1**
(45) Veröffentlichungstag und Bekanntmachung des Hinweises auf die Patenterteilung: **30.03.2022**
(21) Anmeldenummer: 17188773.0
(22) Anmeldetag: 31.08.2017
(51) Int. Cl.: B23Q 1/00, B23Q 7/04, B23Q 37/00, B23Q 1/01, B23Q 11/00

(54) **TRANSPORTABLE WERKSTÜCK-BEARBEITUNGSVORRICHTUNG**
TRANSPORTABLE WORKPIECE PROCESSING DEVICE
DISPOSITIF D'USINAGE DE PIÈCE À USINER TRANSPORTABLE

(30) Priorität: 16.09.2016 DE 202016105167 U
(43) Veröffentlichungstag der Anmeldung: 21.03.2018
(73) Patentinhaber: Zorn Maschinenbau GmbH, 78333 Stockach (DE)
(72) Erfinder: Zeiher, Martin, 78359 Orsingen (DE)
(74) Vertreter: Patent- und Rechtsanwälte Behrmann Wagner PartG mbB

(56) Entgegenhaltungen:
- EP-A2- 1 316 388
- WO-A1-2015/059757
- DE-A1-102012 107 627
- DE-U1-202015 000 787
- US-A1- 2006 104 751

## Beschreibung

Die vorliegende Erfindung betrifft eine transportable Werkstück-Bearbeitungsvorrichtung, insbesondere Miniatur-Bearbeitungszentrum, nach dem Oberbegriff des Anspruchs 1, umfassend eine Bearbeitungseinheit und eine Ansteuer- und/oder Versorgungseinheit, wobei die Bearbeitungseinheit, insbesondere Bohr- und/oder Fräswerkzeuge umfassende, Werkzeugmittel für die Bearbeitung eines mittels, insbesondere Spannmittel umfassende, Haltemitteln haltbaren (fixierbaren, bevorzugt spannbaren), Werkstücks in einem Bearbeitungsbereich sowie Relativbewegungsmittel zur Positionierung der Werkzeugmittel und/oder der das Werkstück haltenden, Haltemittel innerhalb des Bearbeitungsbereichs aufweist, und wobei die Ansteuer- und/oder Versorgungseinheit Ansteuer- und/oder Versorgungsmittel zum Versorgen (Antreiben) der Bearbeitungseinheit mit elektrischer Energie, insbesondere in Form einer modulierten und/oder getakteten Versorgungsspannung und/oder einem moduliertem und/oder getaktetem Versorgungsstrom und/oder mindestens einem Medium, insbesondere Druckluft und/oder Kühlmedium und/oder Schmiermittel und/oder Unterdruckmittel aufweist.

Ferner betrifft die vorliegende Erfindung ein Handhabungs- und Bearbeitungssystem gemäß Anspruch 13, welches eine derartige transportable Werkstück-Bearbeitungsvorrichtung, insbesondere im Wirkbereich eines Industrieroboters, aufweist.

Aus dem Stand der Technik sind in Form gängiger und marktüblicher Bearbeitungszentren mechanische Werkstück-Bearbeitungsvorrichtungen allgemein bekannt. Die aus der EP 164 7354 B1 bekannte Vorrichtung ist in einem einheitlichen Gehäuse realisiert, in dem Bearbeitungsmittel und Versorgungsmittel untrennbar fest miteinander verbunden sind. In der Vorrichtung sind Standard-Antriebskomponenten, insbesondere Schrittmotoren, verbaut, was zu geringen Investitionskosten beiträgt. Dies erlaubt eine kostengünstige Fertigung von Werkstücken, weshalb sich nach der Lehre der Druckschrift das Bearbeitungszentrum besonders für den Einsatz bei Klein- und Kleinstserien eignet. Jedoch ist das Bearbeitungszentrum nicht vollumfänglich für eine automatisierte Fertigung von Bauteilen ausgelegt, da die Vorrichtung keine Bestückungseinrichtung umfasst. Dies hat zur Folge, dass die Taktzeit für die Fertigung mehrerer Werkstücke nicht nur maßgeblich von der Bearbeitungsdauer bestimmt wird, sondern auch durch die Dauer des Werkstückaustausches. Für eine vollautomatische Fertigung ist daher ein zusätzlicher Industrieroboter erforderlich, der grundsätzlich durch eine Spezialfirma an der Bearbeitungsvorrichtung installiert und für die spezielle Anwendung konfiguriert werden muss.

Die aus der EP 2 117 310 B1 bekannte Bearbeitungsvorrichtung zeichnet sich durch ein Werkzeugmagazin mit einem Werkzeugwechsler aus, wodurch ein eingespanntes Werkstück mehrstufig, also sequentiell mit verschiedenen Bearbeitungswerkzeugen, bearbeitet werden kann. Auch diese bekannte Vorrichtung ist als komplexe Baueinheit ausgestaltet, in der sämtliche Komponenten fest relativ zueinander positioniert sind.

In der Druckschrift gibt es keine Hinweise, wie ein vollautomatische Zu- und/oder Abführfunktionalität gestaltet werden kann. Daher ist auch hier davon auszugehen, dass hierfür die Installation und Konfigurierung eines Industrieroboters nötig ist, der nachträglich vor dem Gesamt-Bearbeitungszentrum installiert wird.

Die EP 1 316 388 A2 , welche die Basis für den Oberbegriff des Anspruchs 1 darstellt, offenbart eine Bearbeitungsstation mit einer Zentralkammer für Fertigungs- und Prüfvorgänge zum Aufbau von universellen Prozessmodulen, insbesondere Laser-/Optik-Prozessmodulen oder von laserunterstützten Prozessmodulen, mit zumindest einem zumindest eine Anbindungsfläche aufweisenden Wandelement und einem Deckelement, die miteinander verbunden sind und einen ein zu bearbeitendes Werkstück aufnehmenden Prozessraum umgeben.

Die WO 2015/059757 A1 betrifft ein Arbeitssystem mit einer Basis, auf deren Oberseite eine Führungsschiene angeordnet ist, und eine Arbeitsmaschine, die auf der Oberseite der Basis angeordnet ist und entlang der Führungsschiene bewegt werden kann und mit einem Positionsmechanismus versehen ist, der beim Bewegen der Arbeitsmaschine eine Hilfsbasis in Bezug auf die Basis positioniert, wenn die Hilfsbasis neben der Basis angeordnet ist. Die Arbeitsmaschine kann leicht gegenüber der Basis bewegt werden, da die Position der Hilfsbasis in Bezug auf die Basis durch den Positioniermechanismus bestimmt wird.

Die DE 20 2015 000 787 U1 lehrt eine Produktionsanlage, umfassend ein Produktionsgestell mit vier ein Rechteck einschließenden vertikalen Füßen, wobei zwei Paare der vier Füße an ihrem oberen Ende mit einem oberen horizontalen Querträger miteinander verbunden sind, wobei die zwei Paare der vier Füße beabstandet von dem oberen horizontalen Querträger und von einem unteren Ende der Füße mit einem unteren horizontalen Querträger miteinander verbunden sind, wobei die beiden Querträger jeweils durch zwei zueinander parallele und zu den horizontalen Querträgern senkrechte Längsträger miteinander verbunden sind.

Ausgehend von dem vorgenannten Stand der Technik liegt der Erfindung die Aufgabe zugrunde, eine verbesserte Bearbeitungsvorrichtung anzugeben, die sich durch eine hohe Funktionalität und flexible Einsatzmöglichkeiten auszeichnet. Insbesondere sollen der Bearbeitungsvorrichtung auf einfache Weise Handhabungsmittel zuordenbar sein, um somit eine weitgehend automatisierte, insbesondere vollautomatische Fertigung zu ermöglichen, um somit eine Serienproduktion, insbesondere eine Kleinserienproduktion realisieren zu können. Bevorzugt soll die Bearbeitungsvorrichtung auch ohne solche automatisierten Handhabungsmittel zur Herstellung von Einzelstücken betreibbar sein.

Ferner besteht die Aufgabe darin, ein kombiniertes Handhabungs- und Bearbeitungssystem anzugeben, das neben einer wie zuvor beschrieben en ausgebildeten Bearbeitungsvorrichtung Handhabungsmittel (eine Handhabungsvorrichtung) zum Zusammenwirken mit der Bearbeitungsvorrichtung umfasst.

Diese Aufgabe wird hinsichtlich der transportablen Werkstück-Bearbeitungsvorrichtung mit den Merkmalen des Anspruchs 1 gelöst.

Hinsichtlich des Systems wird die Aufgabe mit den Merkmalen des Anspruchs 13 gelöst.

Vorteilhafte Weiterbildungen der Erfindung sind in den Unteransprüchen angegeben.

Der Erfindung liegt der Gedanke zugrunde, die transportable Werkstück-Bearbeitungsvorrichtung modular auszugestalten, derart, dass die Bearbeitungseinheit eine erste Moduleinheit und die Ansteuer- und/oder Versorgungseinheit eine zweite Moduleinheit bilden, wobei die beiden Moduleinheiten über Versorgungsleitungsmittel miteinander verbunden sind, derart, dass die Moduleinheiten sowohl räumlich voneinander getrennt als auch mechanisch, insbesondere unmittelbar, miteinander verbunden, insbesondere aufeinander gestapelt, miteinander zusammenwirkend betreibbar sind. Mit anderen Worten wird erfindungsgemäß eine aus mindestens zwei Moduleinheiten aufgebaute transportable Bearbeitungsvorrichtung vorgeschlagen, bei der das Bearbeitungseinheitsmodul und das Ansteuer- und/oder Versorgungseinheitsmodul relativ zueinander verstellbar sind, und zwar unter Beibehaltung einer flexiblen Versorgungsleitungsmittelverbindung, so dass die Moduleinheiten sowohl voneinander räumlich getrennt, insbesondere seitlich zueinander benachbart als auch mechanisch miteinander verbunden zusammenwirkend betreibbar sind. Im mechanisch miteinander verbundenen Zustand (Verbindungsposition) bilden die Moduleinheiten bevorzugt eine Werkstück-Bearbeitungsvorrichtung, die klassischen Bearbeitungsvorrichtungen ähnelt, da die Moduleinheiten unmittelbar mechanisch verbunden, insbesondere aufeinander gestapelt sind bzw. eine Gesamteinheit bilden und in dieser Anordnung in der Art einer klassischen Bearbeitungsvorrichtung, insbesondere in der Art eines Miniatur-Bearbeitungszentrums, betreibbar sind. Die erfindungsgemäße modulartige Ausgestaltung ermöglicht es jedoch das Bearbeitungseinheitsmodul unter Beibehaltung der Versorgungsleitungsmittelverbindung räumlich voneinander zu trennen, derart, dass das Bearbeitungseinheitsmodul isoliert bzw. räumlich getrennt von dem Ansteuer- und/oder Versorgungseinheitsmodul einer bestehenden Handhabungsvorrichtung (Handhabungsmitteln) zuordenbar ist, derart, dass das Bearbeitungseinheitsmodul in den Wirkbereich einer solchen bestehenden, insbesondere ortsfesten Handhabungsvorrichtung verstellt werden kann und diese bestehende Handhabungsvorrichtung, die bevorzugt einen Industrieroboter, ganz besonders bevorzugt einen mehrere Bewegungsgelenke aufweisenden Roboterarm umfasst, dazu genutzt wird Werkstücke, sprich Rohlinge, zu Bearbeitungszwecken dem Bearbeitungseinheitsmodul zuzuführen und/oder bereits bearbeitete Werkstücke davon wieder abzuführen, d.h. zu entnehmen. Im Gegensatz zum Stand der Technik besteht somit nicht mehr die Notwendigkeit eine Handhabungsvorrichtung ausschließlich für die Zu- und/oder Abführfunktionalität fest einer bestehenden (Gesamt-) Bearbeitungsvorrichtung zuzuordnen bzw. vor dieser zu installieren - aufgrund der Transportabilität der erfindungsgemäßen Bearbeitungsvorrichtung und deren modulartigem Aufbau ist es mit der erfindungsgemäßen Bearbeitungsvorrichtung im Rahmen eines erfindungsgemäßen Handhabungs- und Bearbeitungssystems möglich die Bearbeitungseinheit (erstes Modul) von der Ansteuer- und/oder Versorgungseinheit (zweites Modul) zu trennen, insbesondere davon abzuheben und aufgrund des deutlich kleineren Volumens und Gewichtes des Bearbeitungseinheitsmoduls verglichen mit der Gesamtbearbeitungsvorrichtung direkt in den Wirkbereich einer Handhabungsvorrichtung, insbesondere einem Industrieroboter zu stellen, insbesondere in eine Roboterzelle, sprich Roboterumhausung hinein, wobei die Ansteuerung und Versorgung der Komponenten des ersten Moduls, insbesondere der Werkzeugmittel und/oder der Relativbewegungsmittel (weiterhin) von der zweiten Moduleinheit (Ansteuer- und/oder Versorgungseinheit) erfolgt. Dabei ist auch eine vorteilhafte Konfiguration möglich, in der wenigstens zwei Bearbeitungseinheiten in den Wirkbereich eines (gemeinsamen) Industrieroboters platziert werden, wodurch sich vorteilhaft die Auslastung des Industrieroboters steigern lässt. Synergistisch ermöglicht die erfindungsgemäße transportable Werkstück-Bearbeitungsvorrichtungen somit nicht nur eine vorteilhafte nachträgliche Integration zum Zusammenwirken mit bestehenden Industrierobotern, sondern darüber hinaus lassen sich auch mehrere erfindungsgemäße transportable Werkstück-Bearbeitungsvorrichtungen in der Verbindungsposition oder auch nur die Bearbeitungseinheit in der Trennposition auf besonders einfache Weise nachträglich zum Zusammenwirken mit einem bestehenden, eventuell umkonfigurierten, Industrieroboter nutzen. Dies ermöglicht ein sehr breites Einsatzfeld der vorliegenden Erfindung bei vorteilhaft geringen Investitionskosten. In diesem Zusammenhang ist eine Winkel- oder Sternanordnung besonders bevorzugt, in welcher zwei oder drei erfindungsgemäße transportable Werkstück-Bearbeitungsvorrichtungen von unterschiedlichen Seiten in den Wirkbereich des Industrieroboters platziert werden. Dies ermöglicht dann, dass sämtliche (zwei oder drei) Bearbeitungseinheiten durch den Industrieroboter, insbesondere durch einen Roboterarm, mit Bauteilen versorgbar sind.

Unter dem Merkmal, dass die Moduleinheiten in der Verbindungsposition mechanisch miteinander verbunden sind, ist im weitesten Sinne zu verstehen, dass sich die Moduleinheiten in dieser Relativposition unmittelbar berühren, insbesondere gestapelt sind. Ganz besonders bevorzugt, jedoch nicht zwingend ist die Realisierung einer mechanischen Fixierung beispielsweise über Klemmen und/oder die Realisierung einer Formschlussverbindung, beispielsweise durch Ineinanderstecken der Moduleinheiten.

Das Bearbeitungseinheitsmodul (erste Moduleinheit) umfasst dabei die Einrichtungen zur unmittelbaren Bearbeitung eines Werkstücks, also zum einen die Werkzeugmittel für die, insbesondere mechanische, Bearbeitung des Werkstücks. Zudem umfasst die erste Moduleinheit Haltemittel, insbesondere Spannmittel zum Halten, insbesondere Spannen des zu bearbeitenden Werkstücks in einem Bearbeitungsbereich der Werkzeugmittel. Darüber hinaus umfasst die erste Moduleinheit Relativbewegungsmittel, insbesondere mindestens einen, ganz besonders bevorzugt elektrischen, Antrieb zum Relativverstellen des Werkstücks zu den Werkzeugmitteln entlang mindestens einer Achse, weiter bevorzugt entlang mehrerer winklig, bevorzugt senkrecht zueinander orientierter Achsen, durch aktives Verstellen der Werkzeugmittel und/oder der Haltemittel mit Werkstück entlang der mindestens einen Achse und/oder durch Rotieren um mindestens eine Spindel (Rotationsachse). Ganz besonders bevorzugt umfassen die Relativbewegungsmittel mehrere Antriebe zum Relativverstellen der Haltemittel und der Werkzeugmittel entlang von mindestens zwei, drei, vier oder fünf Achsen und/oder zum Relativrotieren der Werkzeugmittel relativ zu den Haltemittel mit Werkstück durch aktives Rotieren der Haltemittel und/oder der Werkzeugmittel um eine Spindel.

Die Werkzeugmittel umfassen wiederum bevorzugt mindestens ein Fräs- und/oder Bohrwerkzeug oder sonstige Werkzeuge zur, insbesondere mechanischen Bearbeitung des Werkstücks.

Zusätzlich oder alternativ können auch andere, nicht notwendiger Weise zur mechanischen Bearbeitung dienende Werkzeuge, wie beispielsweise ein Druckkopf zum Bedrucken des Werkstücks von den Werkzeugmitteln umfasst sein. Wie später noch erläutert werden wird; ist es ganz besonders bevorzugt, wenn die Relativverstellbewegungsmittel mindestens einen, bevorzugt mehrere elektromotorische Antrieb/e, insbesondere elektrische Direktantriebe ohne Getriebe, bevorzugt Servomotor, umfasst, um somit auf hydraulische und/oder pneumatische Relativverstellantriebe verzichten zu können und die Funktionalität bzw. Variabilität der Vorrichtung zu erhöhen.

Ganz besonders bevorzugt ist die Bearbeitungseinheit, sprich das erste Modul ausgelegt zur Bearbeitung von Werkstücken mit einer Kantenlänge von maximal 120mm, ganz besonders bevorzugt von maximal 100mm.

Das erste Modul kann als Trocken-Bearbeitungsmodul oder alternativ als Nassbearbeitungsmodul ausgestaltet sein.

Der Bearbeitungsbereich des ersten Moduls ist bevorzugt von zwei sich vorzugsweise senkrecht zu einer Grundfläche bzw. Bodenfläche des ersten Moduls erstreckenden Seiten, die winklig, insbesondere rechtwinklig, zueinander angeordnet sind, frei zugänglich, die besonders bevorzugt von Abdeckungen, insbesondere in der Art einer Tür, nach Außen begrenzt sind, die ganz besonders bevorzugt aus einem durchsichtigen Material, insbesondere Plexiglas, bestehen. Dies ermöglicht eine besonders gute Zugänglichkeit, insbesondere zum Zuführen bzw. Abführen von Werkstücken.

Erfindungsgemäß ist auch vorgesehen, dass in der Verbindungsposition der Bearbeitungsbereich in einer Höhe, bezogen auf eine Aufstellfläche bzw. Abstützfläche des zweiten Moduls auf einem Untergrund aus einem Wertebereich zwischen 1200mm und 1500mm, bevorzugt von etwas 1350mm angeordnet ist, was eine besonders komfortable Arbeitshöhe für eine Bedienperson darstellt. In diesem Zusammenhang ist zu erwähnen, dass die Bearbeitungseinheit nicht nur grundsätzlich von zwei Seiten frei zugänglich ist, sondern in der Verbindungsposition durch die Anordnung auf der Ansteuer- und/oder Versorgungseinheit auch noch gut einsehbar, insbesondere auf Augenhöhe, der Bedienperson anordnenbar ist. Dies ermöglicht es der Bedienperson auf vorteilhaft einfache Weise, insbesondere im aufrechten Stand, und, bevorzugt durch Plexiglas geschützt, den Bearbeitungsbereich in einem Abstand von nur etwa 300mm zu überwachen, wodurch auch feine Bearbeitungsschritte an dem Werkstück direkt über eine Sichtprobe kontrollierbar werden. Der freie Zugang sowie die ergonomische Anordnung des Werkstücks in dem Bearbeitungsbereich ermöglichen damit vorteilhaft etwaige Fehlkonfigurationen frühzeitig zu erkennen, um durch ein schnelles Eingreifen einer geschulten Bedienperson den Schaden für die Bearbeitungseinheit und das Werkstück zu begrenzen.

In einer weiter bevorzugten Ausführungsform kann der Bearbeitungseinheit eine Sitzkonstruktion zugeordnet werden, die der Bedienperson ein bequemes Sitzen ermöglicht.

Die von der zweiten Moduleinheit umfassten Ansteuer- und/oder Versorgungsmittel umfassen bevorzugt eine elektrische Stromversorgung (Leistungsversorgung) zum Versorgen und Antreiben der Komponenten, insbesondere Motoren, der ersten Moduleinheit. Dabei ist es besonders bevorzugt, wenn die Ansteuer- und/oder Versorgungsmittel für diesen Zweck mindestens einen, bevorzugt mehrere elektrische Aktorkontroller, d.h. Leistungshalbleiterbauelemente für die Erzeugung der elektrischen Antriebs-Energie in Form von getakteter und/oder modulierter elektrischer Spannung und/oder moduliertem und/oder getaktetem Strom für die Komponenten der ersten Moduleinheit, insbesondere die elektromotorische Antriebe der Relativbewegungsmittel und/oder der Werkzeugmittel erzeugen, wobei den Leistungshalbleiterbauelementen bevorzugt unmittelbar Logikbausteine zu deren Steuerung zugeordnet sind. Diese Logikbausteine sind bevorzugt Bestandteil solcher Aktorkontroller. Anders ausgedrückt erfolgt die Ansteuerung und die elektrische Versorgung von Komponenten, wie Elektromotoren der ersten Moduleinheit, über in der zweiten Moduleinheit angeordnete Leistungshalbleiter, besonders bevorzugt angesteuert durch Aktor- bzw. Motorkontroller, die aufgrund ihrer Baugröße und ihres Gewichtes und Ihrer Verlustwärme somit bevorzugt nicht zusammen mit der Bearbeitungseinheit verstellt werden müssen.

Zusätzlich zu diesen, bevorzugt jeweils mindestens einen Logikbaustein umfassenden, Aktor- bzw. Motorkontrollern sind bevorzugt auch programmierbare Logikmittel, insbesondere in Form von mindestens einer SPS-Schnittstelle vorgesehen, über die die Vorgabe eines Bearbeitungsprozesses über verschiedene Arbeitsschritte in Form von sequentiell abzuarbeitende Teilschritten erfolgt. Die Logikmittel steuern also bevorzugt die Aktorkontroller an, um bestimmte Arbeitsschritte der Bearbeitungseinheit, insbesondere komplexe Relativbewegungsabläufe vorzugeben. Diese sind durch entsprechende Programmierung der Logikmittel zur Herstellung unterschiedlicher Werkstücke bzw. Produkte variierbar.

Die Ansteuer- und/oder Versorgungsmittel können zusätzlich oder alternativ Druckluftversorgungsmittel, insbesondere einen Druckluftkompressor und/oder einen Druckluftspeichertank und/oder Hydraulikversorgungsmittel, insbesondere eine Hydraulikmediumpumpe und/oder einen Hydraulikmediumspeicher und/oder Unterdruckmittel und/oder Schmiermittel und/oder Kühlmittelversorgungsmitteln, insbesondere eine Kühlmediumpumpe und/oder einen Kühlmediumspeicher zur Versorgung der Bearbeitungseinheit, insbesondere der Werkzeugmittel und/oder der Relativbewegungsmittel über Versorgungsleitungsmittel umfassen. Auch kann eine Pneumatik- und/oder Hydraulikansteuerung, insbesondere eine Hydraulikverteilung mit umfasst sein.

Über die Versorgungsleitungsmittel können bei entsprechender Ausgestaltung auch feste und/oder flüssige und/oder gasförmige Medien absaugbar sein bzw. abgesaugt werden. Auch ist eine Versorgung der ersten Moduleinheit mit Schmiermittel möglich.

Je nach Ausgestaltung bzw. der Vielfalt der Ansteuer- und/oder Versorgungsmittel umfassen die Versorgungsleitungsmittel mindestens ein Versorgungskabel (Stromkabel) und/oder mindestens eine Versorgungsschlauchleitung zum Versorgen der Bearbeitungseinheit mit Druckluft, Hydraulikmedium, Schmiermittel und/oder Kühlmedium.

Die Versorgungsleitungsmittel sind zumindest abschnittsweise flexibel ausgestaltet und weisen eine Länge auf, die ein Relatiwerstellen der Moduleinheiten zueinander, insbesondere in einem Radius von mindestens 1m, bevorzugt von mindestens 1,5m, ganz besonders bevorzugt von mindestens 2m, noch weiter bevorzugt 2,5m ermöglicht. Ganz besonders bevorzugt bestehen die Versorgungsleitungsmittel aus einem ganzen, flexiblen Bündel von mindestens einem Kabel und mindestens einem Schlauch, ganz besonders bevorzugt von mehreren Kabeln und/oder Schläuchen.

Ganz besonders bevorzugt ist es, wenn die erste Moduleinheit möglichst kleinvolumig ausgestaltet ist, um sich besonders leicht bzw. platzsparend im Bereich bestehender Handhabungsvorrichtungen, insbesondere Industrieroboter, ganz besonders bevorzugt im Bereich einer Roboterzelle anordnen zu lassen. Bevorzugt sind dabei Breitenerstreckungsmaße und/oder Tiefenerstreckungsmaße der Bearbeitungseinheit aus einem Wertebereich zwischen 600mm und 1200mm, ganz besondere bevorzugt zwischen 770mm und 1100mm gewählt und/oder sich senkrecht hierzu erstreckende Höhenerstreckungsabmessungen aus einem Wertebereich zwischen 900mm und 1200mm, ganz besonders bevorzugt zwischen 1050mm und 1100mm .

Die Breitenerstreckungsmaße und/oder Tiefenerstreckungsmaße der Ansteuer- und/oder Versorgungseinheit sind bevorzugt aus einem Wertebereich zwischen 600mm und 1200mm, ganz besondere bevorzugt zwischen 770mm und 1100mm gewählt und/oder sich senkrecht hierzu erstreckende Höhenerstreckungsabmessungen aus einem Wertebereich zwischen 900mm und 1200mm, ganz besonders bevorzugt zwischen 985mm und 1100mm .

Auch ist bei aufeinander angeordneten Moduleinheiten der platzsparende Einsatz der Bearbeitungsvorrichtung als Einzelgerät bzw. Stand-Alone-Gerät möglich, also in der Art herkömmlicher Bearbeitungsvorrichtungen.

Die Bearbeitungsvorrichtung, insbesondere die zweite Moduleinheit, d.h. die Ansteuer- und/oder Versorgungseinheit, umfasst, wie zuvor bereits angedeutet, bevorzugt programmierbare Logikmittel, insbesondere mindestens eine SPS-Steuerung, über die sich die Bearbeitungsvorrichtung konfigurieren lässt. Somit können über die Vorgabe von verschiedenen sequentiell und/oder parallel abzuarbeitenden Bearbeitungsschritten, insbesondere Relativbewegungen entlang mehrerer Achsen und/oder um mindestens eine Spindelachse, komplexe im Sinne von mehrstufige Bearbeitungen der Werkstücke vorgenommen werden. Über die programmierbaren Logikmittel erfolgt bevorzugt zudem die Ansteuerung der ebenfalls bereits erläuterten und einen Bestandteil der Ansteuer- und Versorgungsmittel bildenden Aktor- bzw. Motorkontroller, die die Aktoren, insbesondere Motoren der Bearbeitungseinheit, insbesondere über Leistungshalbleiterbauelemente mit elektrischer Antriebs-Energie versorgen, was insbesondere in Form von getakteter und/oder modulierter elektrischer Spannung und/oder moduliertem und/oder getaktetem Strom erfolgt.

In einer alternativen Ausführungsform können die programmierbaren Logikmittel, insbesondere in Form einer SPS-Steuerung, auch der Bearbeitungseinheit zugeordnet sein, um insbesondere die zurückgelegte Wegstrecke von, beispielsweise analogen und damit gegen elektromagnetischen Störquellen empfindlichen, Sensorsignalen möglichst kurz zu halten. Dabei erfolgt eine Auswertung der Sensorsignale durch die programmierbaren Logikmittel direkt in der Bearbeitungseinheit, wodurch ein digitales und damit gegen Störeinkopplung robustes Steuersignal anschließend an die Ansteuer- und/oder Versorgungseinheit übertragen wird, das dort von den Aktor- bzw. Motorkontrollern der Versorgungsmittel zur Ansteuerung der Leistungskomponenten, besonders bevorzugt Leistungshalbleiterbauelemente, genutzt wird, wodurch die/der für die Ansteuerung der Aktoren und Motoren der Bearbeitungseinheit notwendige getaktete und/oder modulierte elektrische, kombinierte Ansteuer- und Versorgungsspannung und/oder -strom erzeugt wird, die/der anschließend wiederum den Aktoren der Bearbeitungseinheit zugeführt wird.

Unabhängig von der Positionierung der Logikmittel an der ersten oder zweiten Moduleinheit sind diese gemäß einer bevorzugten Ausführungsvariante mit Sensormitteln der Bearbeitungseinheit, beispielsweise zur Weg- und/oder Positionsdetektierung, verbunden.

Besonders bevorzugte Weiterbildungen der Erfindung sehen Verbindungsmittel vor, die das mechanische formschlüssige Verbinden der beiden Moduleinheiten in der Verbindungsposition ermöglichen. Somit kann ein Verrutschen der Bearbeitungseinheit, die auf der Ansteuer- und/oder Versorgungseinheit angeordnet wird und sich darauf abstützt, vermieden werden. Außerdem sind in einer ganz besonders bevorzugten Ausführungsform die Versorgungsmittel so ausgestaltet, dass durch das Einführen in Form eines von oben Herablassen durch eine Führung der Verbindungselemente eine formschlüssige Anordnung der Bearbeitungseinheit auf der Ansteuer- und/oder Versorgungseinheit automatisch erfolgt.

Alternativ dazu und bevorzugt ist eine Ausführungsform realisierbar, bei der bewusst auf eine formschlüssige Verbindung verzichtet wird und die Moduleinheiten in der Verbindungsposition ausschließlich mechanisch dadurch verbunden sind, dass die erste Moduleinheit auf, insbesondere auf einer Oberseite der unteren zweiten Moduleinheit aufsteht und sich dort mit ihrem Eigengewicht abstützt.

Als besonders vorteilhaft hat es sich herausgestellt, wenn die Bearbeitungseinheit (erstes Modul) eine Unterplatte aus einem, insbesondere massiven Material, ganz besonders bevorzugt einem Steinmaterial, weiter bevorzugt einem Natursteinmaterial, ganz besonders bevorzugt aus Granit aufweist. Die Unterplatte zeichnet sich bevorzugt durch eine, insbesondere nach DIN EN 1936 2007-02 bestimmte Rohdichte von mindestens 1500 kg/m³ und/oder ein Mindestgewicht von 200kg, ganz besonders bevorzugt von 300kg, noch weiter bevorzugt von 400kg aus. Hierdurch ist es möglich, die erste Moduleinheit, insbesondere im Bereich der Handhabungsvorrichtung ohne weitere Fixiermaßnahmen zu positionieren. Besonders bevorzugt ist es, wenn die Unterplatte bzw. das Unterplattenmaterial sich durch einen spezifischen Wärmekoeffizienten von mindestens 800 J/(kg K) auszeichnet, wodurch die Unterplatte trotz gegebenenfalls hoher Temperaturschwankungen maßstabil bzw. formstabil bleibt und somit eine hohe Bearbeitungsgenauigkeit gewährleistet werden kann. Weiter bevorzugt ist eine Ausführungsform der Erfindung, bei der auf der Unterplatte eine weitere Platte, insbesondere aus dem gleichen Material wie die Unterplatte und/oder einem Material, welches mindestens einen Parameter aus Anspruch 6 erfüllt, angeordnet ist, die sich in ihrer Längenerstreckung im Gegensatz zu der Unterplatte nicht in der Horizontalebene, sondern in einer Vertikalebene, die senkrecht zu der Horizontalebene angeordnet ist, erstreckt wobei jeweils zwei Außenkanten der Platten in einer Ebene liegen. Somit bilden beide Platten ein Basisgerüst, das vibrationsarm und gegenüber Temperaturschwankungen formstabil ist. In einer weiter bevorzugten Ausführungsform können die beiden winklig zueinander angeordneten Steinplatten durch eine dritte Platte, insbesondere aus dem identischen Material, ergänzt werden, die winklig, insbesondere rechtwinklig zu den beiden anderen Platten angeordnet ist und bevorzugt mit der sich vertikal zur Unterplatte erstreckenden Platte in einer Draufsicht von oben eine T-Kontur bildet.

Als besonders zweckmäßig hat sich die zusätzlich erfindungsgemäß vorgesehene Weiterbildung herausgestellt, bei der die Unterplatte über eine Verbindungseinheit an einen Modulrahmen angeordnet ist. Weiter bevorzugt sind an dem Modulrahmen Bohrungen angeordnet, die das schnelle und sichere Fixieren der Bearbeitungseinheit ermöglichen. Somit kann die Bearbeitungseinheit über ein Stahlseil an einen Lastkran fixiert werden und trotz des hohen Gewichts an dem gewünschten Bestimmungsort aufgestellt werden. Besonders bevorzugt ist dabei eine Ausführungsform, die nur eine Bohrung vorzieht, die mittig zu der Bearbeitungseinheit angeordnet ist und somit im angehobenen Zustand eine horizontale Ausrichtung der Bearbeitungseinheit sicherstellt.

In einer weiter bevorzugten Ausführungsform ist das Verstellen der Ansteuer- und/oder Versorgungseinheit mit Hilfe eines gängigen Gabelhubwagens möglich. Dafür sind an der Ansteuer- und/oder Versorgungseinheit Aussparungen vorgesehen, die die Aufnahme einer handelsüblichen Gabelkonstruktion eines Gabelhubwagens ermöglichen. In einer weiter bevorzugten Ausführungsposition sind diese Aussparungen hinter Sichtschutzvorrichtungen, insbesondere Sichtschutzblechen, verdeckt. Weiter vorgesehen sind der Ansteuer- und/oder Versorgungseinheit Öffnungen mit Gewinden zugeordnet, die Gewindestangen aufnehmen können, was das Befestigen von Stahlseilen eines Lastenkrans ermöglicht.

Die Erfindung sieht eine Dreifußanordnung vor, auf der die Bearbeitungseinheit (erste Moduleinheit) insbesondere im Bereich einer bestehenden Handhabungsvorrichtung und/oder auf der zweiten Moduleinheit anordbar und/oder angeordnet ist. Mit anderen Worten umfasst die erste Moduleinheit bevorzugt Mittel zur Realisierung einer Dreipunktauflage. Durch die Dreifußanordnung wird eine Anordnung der Bearbeitungseinheit in einer Ebene, mit bevorzugter horizontaler Ausrichtung, mit minimalem Materialaufwand ermöglicht. Dabei ist besonders bevorzugt, dass mindestens einer der Standbeine in der Länge variiert werden kann. Somit ist trotz unebenem Untergrund eine horizontale Anordnung der Bearbeitungseinheit möglich: Dies erweitert, neben den geringen Dimensionen der Bearbeitungseinheit, den Einsatzbereich der Bearbeitungsvorrichtung, da auch eine einfache Integration der Bearbeitungseinheit in Anlagen mit unebenem Untergrund möglich wird.

In einer weiter bevorzugten Ausführungsform sind der Dreifuß-Anordnung weitere, ganz besonders bevorzugt drei weitere Kippschutz-Füße zugeordnet, die das Kippen der Bearbeitungseinheit beim Verstellen verhindern. Im Stand auf einer horizontalen Unterlage berühren diese Kippschutz-Füße nicht die Unterlage, also in der Verbindungsposition nicht die Oberseite der zweiten Moduleinheit und/oder in der Trennposition nicht eine Aufstellfläche, insbesondere einer Handhabungsvorrichtung.

Weiter ist erfindungsgemäß vorgesehen, dass der Dreifußanordnung Vibrations- und Stoß-Absorptionsmittel zugeordnet sind, die in Form einer Luftfederung ausgebildet sind. Dies erweitert erfindungsgemäß den Vibrationsschutz der Bearbeitungseinheit und sichert eine konstant hohe Bearbeitungsgenauigkeit, da der Bearbeitungsprozess trotz Erschütterungen durch benachbarte Anlagen nicht beeinflusst oder gar abgebrochen werden muss. Zusätzlich führt dies zu einer höheren Zuverlässigkeit der Bearbeitungseinheit.

Eine weiter bevorzugte Ausführungsform der Erfindung sieht vor, dass die Werkzeuge der Werkzeugmittel ausschließlich ein Werkzeug oder mindestens ein Werkzeug, ganz besonders bevorzugt mehrere Werkzeuge aus der Werkzeuggruppe: Bohrwerkzeug, Fräswerkzeug, Druckmittel, insbesondere Tintenstrahl-Druckkopf u nd/oder 3D-Druckmittel, Trennmittel, insbesondere Laser, Wasserstrahlschneider, mech. Stahl-. bzw. Bolzenschneider, Diamantenschneider, Verbindemittel, insbesondere Schweiß- und/oder Klebemittel, Erfassungsmittel, insbesondere 3D-Scanner, umfassen, bzw. dass den Werkzeugmitteln ausschließlich ein oder mindestens ein, ganz besonders bevorzugt mehrere der vorgenannten Werkzeuge zugeordnet sind. Dies erweitert die hohe Flexibilität der Bearbeitungsvorrichtung und sichert eine hohe Individualisierung, da eine Bearbeitungseinheit auch kurzfristig umkonfiguriert werden kann. Gleichzeitig ermöglicht dies ein breites Einsatzgebiet der Bearbeitungseinheit und ermöglicht somit auch die Wiederverwertung der Bearbeitungsvorrichtung in anderen Produktionsanlagen.

Wie sich aus der vorstehenden Werkzeugaufzählung ergibt, müssen diese nicht zwingend bzw. zumindest nicht sämtliche Werkzeuge zur mechanischen Bearbeitung des Werkstücks ausgebildet sein - die Werkzeuge können alle denkbaren Werkzeuge umfassen, insbesondere auch Schweiß- und/oder Klebemittel, Erfassungsmittel, insbesondere 3D-Scannmittel oder gar Druckmittel, insbesondere Digitaldruckmittel in Form eines Tintenstrahl-Druckkopfs zum Bedrucken des Werkstücks, insbesondere mit Farbe und/oder Lack. Zusätzlich oder alternativ ist es möglich 3D-Druckmittel vorzusehen, um das Werkstück durch 3D-Druck zu bearbeiten, insbesondere komplettieren zu können.

Die Gruppe von Werkzeugen kann zudem mindestens eine Reinigungsdüse und/oder eine Dosiereinrichtung umfassen.

Durch die Schweiß- und/oder Klebemittel ist die Montage von Werkstücken aus mehreren Bestandteilen bzw. Komponenten möglich.

Eine weiter bevorzugte Ausführungsform der Erfindung sieht vor, dass die verschiedenen Werkzeuge nicht oder nicht nur manuell, sondern automatisch durch ein Werkzeugmagazin ausgetauscht werden können. Da das Werkzeugmagazin mindestens zwei Werkzeuge umfasst, ermöglicht dies die mehrstufige Bearbeitung von auf dem Spanntisch fixierten Werkstücken. Dies erlaubt die optimale Abstimmung und Ausnutzung von Bearbeitungszeiten im Rahmen von komplexen Fertigungsanlagen, in die eine Bearbeitungseinheit integriert wurde. Dies steigert die Auslastung der Bearbeitungsvorrichtung.

In einer weiter bevorzugten Ausführungsform ist der Bearbeitungseinheit eine Benutzerschnittstelle, insbesondere umfassend ein Display und/oder eine Bedieneinheit angeordnet, die signalleitend mit den Logikmitteln verbunden sind/ist. Dies ermöglicht einer Bedienperson das Nachjustieren und/oder Starten und/oder Parametrisieren der Bearbeitungsschritte direkt an der Bearbeitungseinheit, was der Bedienperson das unmittelbare Beobachten seiner Eingabe ermöglicht und ein gegebenenfalls sofortiges Eingreifen erlaubt.

Ganz besonders bevorzugt umfassen die Relativbewegungsmittel mindestens einen, ganz besonders bevorzugt mehrere Direktantriebe zum Relativverstellen der Werkzeugmittel zu den Haltemitteln bzw. dem Werkstück durch aktives Verstellen der Haltemittel und/oder der Werkzeugmittel entlang und/oder um mindestens eine, ganz besonders bevorzugt mehrere senkrecht zueinander verlaufende Achsen. Unter Direktantrieben werden dabei Antriebe verstanden, bei denen der elektrische Antriebsmotor direkt an einer Verstellmimik angebunden ist, so dass auf ein Getriebe verzichtet werden kann und durch eine/n getaktete/n und/oder modulierte/n Versorgungsspannung und/oder -strom angesteuert wird. Hierdurch können Wirkungsgradverluste, wie sie durch Getriebe auftreten, vermieden werden.

In einer weiter bevorzugten Ausführungsform der Erfindung sind die programmierbaren Logikmittel in einer standard-rechnergestützten numerischen Steuerung, insbesondere in einer standard CNC-Programmiersprache programmierbar. Dies erhöht die Flexibilität der Bearbeitungseinheit weiter und sichert der Bearbeitungsvorrichtung auch eine hohe Akzeptanz, da kein gerätgebundenes spezifisches Wissen für die Konfiguration der transportablen Werkzeug - Bearbeitungsvorrichtung erforderlich ist. Damit entfallen auch Kosten für die Beauftragung von Spezialfirmen, wie sie für die Umkonfigurierung von dem Stand der Technik zugeordneten Bearbeitungszentren derzeit anfallen.

Die Versorgungsleitungsmittel sind ganz besonders bevorzugt unten und/oder seitlich, d.h. nicht aus der Oberseite der zweiten Moduleinheit herausgeführt und seitlich und/oder oben, jedenfalls bevorzugt nicht von unten in die erste Moduleinheit eingeführt, um ein Verklemmen beim Absetzen der ersten Moduleinheit im Bereich einer Handhabungsvorrichtung und/oder auf der zweiten Moduleinheit zu verhindern. Zusätzlich oder alternativ können die Versorgungsleitungsmittel über lösbare Schnittstellen (Buchse-/Stecker und/oder Schlauchkupplungen) lösbar an der ersten und/oder der zweiten Moduleinheit festgelegt und/oder festlegbar sein, um ein Relativverstellen der Moduleinheiten ohne Komplikation mit den Versorgungsleitungsmitteln zu ermöglichen und/oder diese in der Länge anpassen zu können bzw. diese auszutauschen.

Alternativ dazu ist auch eine Ausführungsversion denkbar, bei der beim Betrieb der Bearbeitungsvorrichtung in der Verbindungsposition die Versorgungsleitungsmittel aus der Oberseite der Ansteuer- und/oder Versorgungseinheit direkt in die Unterseite der Bearbeitungseinheit geführt sind.

Neben der erfindungsgemäßen transportablen Werkstück-Bearbeitungsvorrichtung wird auch Schutz für den Betrieb einer solchen Vorrichtung innerhalb eines Handhabungs- und Bearbeitungssystem beanstandet, welches eine erfindungsgemäße Bearbeitungsvorrichtung umfasst, die die mindestens zwei relativ zueinander verstellbaren Moduleinheiten umfasst, die sowohl aufeinander bzw. miteinander in Kontakt, d.h. miteinander verbunden als auch räumlich getrennt voneinander betreibbar sind. Das Handhabungs- und Bearbeitungssystem umfasst eine Handhabungsvorrichtung, insbesondere mit Handhabungsmitteln, insbesondere in Form mindestens eines Industrieroboters, ganz besonders bevorzugt eines Roboterarms, welcher ganz besonders bevorzugt um mehrere Schwenkgelenke verschwenkbar ist. Dabei ist es besonders bevorzugt, wenn das erste Modul, d.h. das Bearbeitungseinheitsmodul im Wirkbereich der Handhabungsvorrichtung angeordnet ist und das zweite Modul von dem ersten Modul beabstandet angeordnet ist, insbesondere außerhalb des Wirkbereichs der Handhabungsvorrichtung, um das erste Modul von dort aus anzusteuern und/oder zu versorgen, beispielsweise mit elektrischer Energie und/oder Betriebsmedien, wie Hydraulikmedium, Pneumatikmedium oder Kühlmedium. Ganz besonders bevorzugt befindet sich das erste Modul innerhalb einer fakultativen Roboterzelle der besonders bevorzugt als Industrieroboter ausgebildeten Handhabungsvorrichtung.

Es ist vorgesehen, dass das erste Modul der Bearbeitungsvorrichtung von dem zweiten Modul getrennt, insbesondere abgehoben wird und getrennt, insbesondere beabstandet von diesem positioniert wird, insbesondere im Wirkbereich einer Handhabungsvorrichtung, die ganz besonders bevorzugt wie zuvor beschrieben ausgebildet ist. Es ist vorgesehen, dass die erste Moduleinheit in dieser getrennten Position betrieben wird und über Versorgungsleitungsmittel von der zweiten Moduleinheit versorgt und/oder angesteuert wird und somit mindestens ein Werkstück mechanisch und/oder auf sonstige Weise bearbeitet wird.

Weitere Vorteile, Merkmale und Einzelheiten der Erfindung ergeben sich aus der nachfolgenden Beschreibung bevorzugten Ausführungsbeispielen sowie anhand der Zeichnungen, diese zeigen in:
- Fig. 1:: eine Vorderansicht der erfindungsgemäßen transportablen Werkstück-Bearbeitungseinheit in einer Verbindungsposition, bei der die Bearbeitungseinheit auf der Ansteuer- und/oder Versorgungseinheit angeordnet ist, sich darauf abstützt,
- Fig. 2:: eine Seitenansicht analog zu Fig. 1,
- Fig. 3:: eine Vorderansicht der erfindungsgemäßen transportablen Werkstück-Bearbeitungsvorrichtung in einer Trennposition, wobei die beiden Moduleinheiten bestehend aus der Bearbeitungseinheit rechts oben und die Ansteuer- und Verbindungseinheit links unten angeordnet sind,
- Fig. 4:: eine stark schematisierte Ansicht eines erfindungsgemäßen Handhabungs- und Bearbeitungssystems, umfassend eine erfindungsgemäße Bearbeitungsvorrichtung sowie eine als Industrieroboter mit Roboterzelle ausgebildete Handhabungsvorrichtung und
- Fig. 5:: eine Draufsicht einer bevorzugten Sternanordnung, in welcher drei erfindungsgemäße transportable Werkstück-Bearbeitungsvorrichtungen von unterschiedlichen Seiten in den Wirkbereich eines Industrieroboters platziert sind.

In den Figuren sind gleiche Elemente und Elemente mit der gleichen Funktion mit den gleichen Bezugszeichen gekennzeichnet.

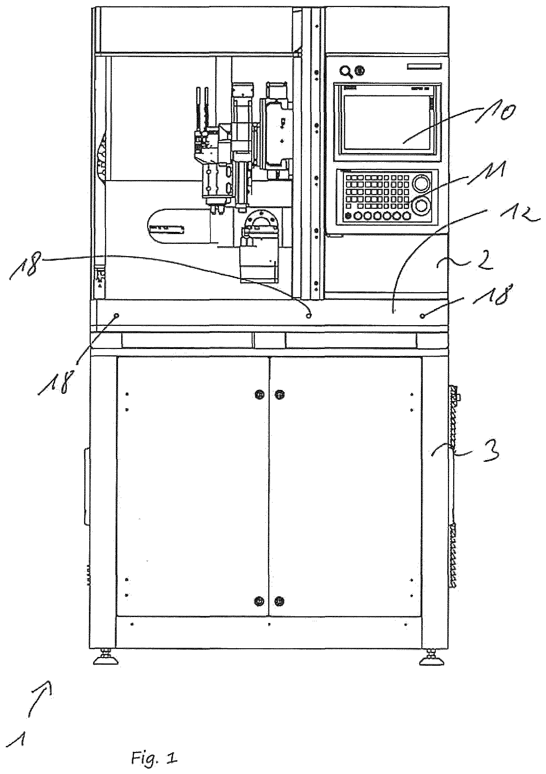

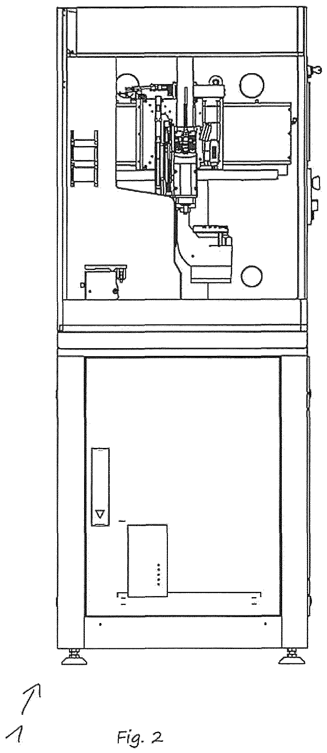

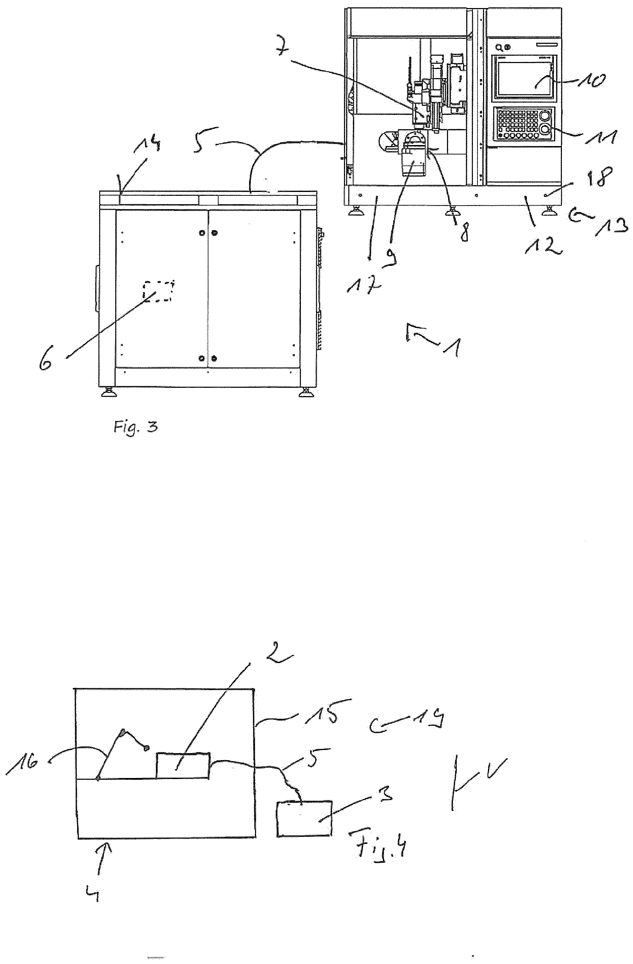

In den Fig. 1 bis 3 ist eine erfindungsgemäße transportable Werkstück-Bearbeitungsvorrichtung 1 gezeigt. Diese umfasst eine Bearbeitungseinheit 2, sowie eine Ansteuer- und/oder Versorgungseinheit 3, die sich in den Darstellungen gemäß den Fig. 1 und 2 in einer Verbindungsposition befinden, in der die Einheiten 2, 3 unmittelbar mechanisch miteinander verbunden sind, indem sie aufeinander gestapelt sind - konkret ist die Bearbeitungseinheit 2 auf der Ansteuer- und/oder Versorgungseinheit 3 gestapelt. In Fig. 3 befinden sich die Einheiten 2, 3 in einer Trennposition, hier mit räumlichen Abstand zueinander. Die Einheiten 2, 3 können erfindungsgemäß sowohl in der Verbindungsposition als auch in der Trennposition zur Bearbeitung von Werkstücken zusammenwirken, da beide Module über Versorgungsleitungsmittel 5 miteinander verbunden sind.

Wie sich implizit aus der voranstehenden Figurenbeschreibung ergibt, ist die erfindungsgemäße Bearbeitungsvorrichtung modular aufgebaut, indem die Bearbeitungseinheit 2 eine erste Moduleinheit und die Ansteuer- und/oder Versorgungseinheit 3 eine zweite Moduleinheit bildet, die relativ zueinander verstellbar sind, und zwar zwischen der in den Fig. 1 und 2 gezeigten Verbindungsposition und der in Fig. 3 (und auch in der später noch zu erläuternden Fig. 4) gezeigten Trennposition. Charakteristisch für die erfindungsgemäße Bearbeitungsvorrichtung ist, dass die erste und die zweite Moduleinheit sowohl in der Verbindungsals auch in der Trennposition miteinander zusammenwirkend betreibbar sind. So ist die Bearbeitungsvorrichtung in der in den Fig. 1 und 2 gezeigten Verbindungsposition in der Art einer bisher üblichen bzw. bekannten Bearbeitungsvorrichtung als Stand-Alone-Einrichtung nutzbar - in der in den Fig. 3 und 4 gezeigten Trennposition, in der die erste Moduleinheit von der zweiten Moduleinheit getrennt ist, in dem konkreten Fall abgehoben und seitlich versetzt angeordnet, kann die Bearbeitungseinheit 2 bzw. die erste Moduleinheit im Wirkbereich einer in Fig. 4 gezeigten Handhabungsvorrichtung 4 eingesetzt werden, um Werkstücke zu- und/oder bearbeitete Werkstücke abzuführen, und um somit eine automatisierte bzw. vollautomatisierte Produktion, insbesondere Serienproduktion bzw. Bearbeitung von Werkstücken gewährleisten zu können.

Die Ansteuer- und/oder Versorgungseinheit 3, d.h. die zweite Moduleinheit umfasst nicht im Detail gezeigte Ansteuer- und/oder Versorgungsmittel, insbesondere in der Form mindestens einer Leistungselektronik bestehend aus mehreren Leistungshalbleiterbauelementen und bevorzugt mindestens eines Logikbausteins, die zusammen einen Motorkontroller bilden und zur Bereitstellung von elektrischer Antriebs-Energie in Form modulierter/m und/oder getakteter/m Versorgungsspannung und/oder Versorgungsstrom für Antriebe, insbesondere Motoren der ersten Moduleinheit bzw. der Bearbeitungseinheit 2, insbesondere von deren Werkzeugmitteln und/oder Relativbewegungsmitteln. Zusätzlich oder alternativ können die in der zweiten Moduleinheit angeordneten Ansteuer- und/oder Versorgungsmittel Mittel zur Versorgung der Bearbeitungseinheit 2 mit Hydraulikmedium und/oder Kühlmedium und/oder Druckluft (Pneumatikmedium) und/oder Schmiermedium umfassen.

Bevorzugt sind den Ansteuer- und/oder Versorgungsmitteln, beispielsweise in der zweiten Moduleinheit angeordnete programmierbare Logikmittel 6 zur Koordination bzw. Vorgabe komplexer Programmabläufe für die Bearbeitung eines Werkstücks mit der ersten Moduleinheit zugeordnet.

Die elektrische Energie und sonstige Versorgungsmedien sind über lediglich schematisch angedeutete Versorgungsleitungsmittel 5, die insbesondere mindestens ein flexibles Kabel und/oder eine flexible Rohrleitung, bevorzugt mindestens einen Schlauch umfassen von der zweiten Moduleinheit zur ersten Moduleinheit übertragbar.

Die Bearbeitungseinheit 2 umfasst in an sich bekannter Weise Werkzeugmittel 7 zum Bearbeiten eines Werkstücks, Haltemittel 8, hier Spannmittel zum Fixieren des Werkstücks sowie Relativbewegungsmittel 9 zum Relativbewegen der Haltemittel 8 und der Werkzeugmittel 7 entlang und/oder um mindestens eine Achse, vorzugsweise entlang mehrerer, insbesondere rechtwinklig zueinander angeordneter Achsen.

Als Benutzerschnittstelle umfasst die Bearbeitungseinheit 2, d.h. die erste Moduleinheit ein Display 10, welches bei Bedarf als berührungsempfindliches Display 10 zur Befehlseingabe realisiert sein kann sowie Eingabemittel 11, hier beispielhaft in Form einer Tastatur. Diese sind in der dargestellten Ausführungsform signalleitend über eine nicht gezeigte Verbindungsleitung mit den vorerwähnten Logikmitteln 6 verbunden, welche dann die Ansteuer- und/oder Versorgungsmittel der zweiten Moduleinheit ansteuern, die wiederum Komponenten der ersten Moduleinheit ansteuern und/oder Versorgen.

Zu erkennen ist ferner, dass die Bearbeitungseinheit 2, sprich die erste Moduleinheit, eine Unterplatte 12, hier aus Granit aufweist, die über eine Dreifußanordnung 13 alternativ auf einer Oberseite 14 der zweiten Moduleinheit, d.h. der Ansteuer- und/oder Versorgungseinheit 3 oder alternativ beabstandet zu dieser, insbesondere, wie in Fig. 4 gezeigt innerhalb einer Roboterzelle 15 einer einen Industrieroboter, konkret einen Roboterarm 16 umfassenden Handhabungsvorrichtung 4 abstellbar ist.

Die Werkzeugmittel 7 interagieren mit einem nicht im Detail erläuterten Werkzeugmagazin, in dem die unterschiedlichsten Werkzeuge aufnehmbar sind, insbesondere zur mechanischen Bearbeitung, insbesondere zur spanabhebenden Bearbeitung des Werkstücks. Zusätzlich oder alternativ können hier die unterschiedlichsten Werkzeuge, wie Druckmittel zum, insbesondere digitalen Bedrucken des Werkstücks und/oder Trennmittel zum Abtrennen, insbesondere Schneiden von Werkstückabschnitten vorgesehen sein sowie beispielsweise Schweiß- und/oder Klebemittel und/oder Erfassungsmittel, insbesondere 3D-Scanner.

In den Fig. 1 bis 3 ist zu erkennen, dass die Unterplatte 12 in einem Modulrahmen 17 aufgenommen ist, welcher Bohrungen 18 umfasst, über die die erste Moduleinheit, sprich die Bearbeitungseinheit 2 über mindestens ein Stahlseil mithilfe eines Lastkrans zwischen der in den Fig. 1 und 2 gezeigten Verbindungsposition und der in Fig. 3 gezeigte Trennpositionen verstellbar sind.

In Fig. 4 ist ein nach dem Konzept der Erfindung ausgebildetes Handhabungs- und Bearbeitungssystem 19 gezeigt. Dieses umfasst, wie zuvor bereits angedeutet, eine Handhabungsvorrichtung 4, hier umfassend einen Roboterarm 16 bzw.

Industrieroboter, in dessen Wirk- bzw. Arbeitsbereich die erste Moduleinheit, d.h. die Bearbeitungseinheit 2 positioniert ist, und zwar bevorzugt in Form einer Dreipunktauflage. Die Bearbeitungseinheit 2 ist seitlich bezogen auf eine Vertikalachse V zu der Ansteuer- und/oder Versorgungseinheit 3 beabstandet, die Moduleinheiten befinden sich also in ihrer Trennposition, sind jedoch über Versorgungsleitungsmittel 5 weiterhin wirkverbunden und wirken somit zur Bearbeitung von Werkstücken zusammen. Die Werkstücke können mittels des Roboterarms 16 zugeführt und bearbeitete Werkstücke entnommen bzw. abgeführt werden. Aus der Trennposition sind die Moduleinheiten wieder in eine Verbindungsposition überführbar, in der bevorzugt die erste Moduleinheit auf der zweiten Moduleinheit, d.h. entlang der Vertikalachse V übereinander gestapelt sind.

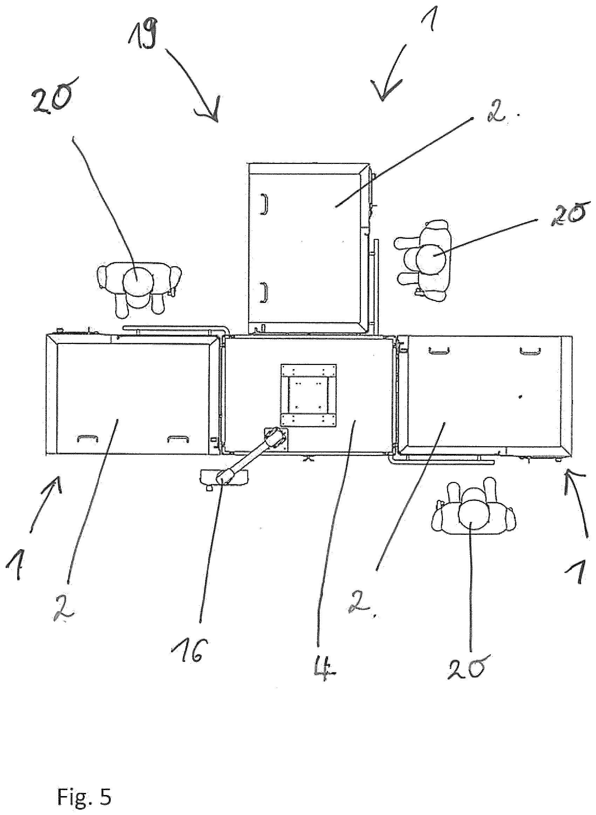

Auch Fig. 5 zeigt eine bevorzugte Ausführungsform eines Handhabungs- und Bearbeitungssystems 19, dass eine einen Roboterarm 16 umfassende Handhabungsvorrichtung 4 aufweist sowie drei transportable Werkstück-Bearbeitungsvorrichtungen in einer Sternanordnung. In der dargestellten Sternanordnung sind die drei erfindungsgemäßen Bearbeitungseinheiten 2 von unterschiedlichen Seiten in den Wirkbereich des Roboterarms 16 platziert; dieser kompakte Arbeitsbereich kann selbst wiederum den Arbeitsbereich einer (bereits vorhandenen) Fertigungszelle od. dgl. Infrastruktur realisiert sein. Dies ermögliche es auf vorteilhaft einfache Weise, dass alle drei Bearbeitungseinheiten 2 in der Verbindungsposition oder alternativ auch der Trennposition durch den Roboterarm 16 mit Werkstücken versorgbar sind. Dabei können alle drei Bearbeitungseinheiten 2 die gleichen Bearbeitungsschritte durchführen, wobei die verschiedenen Bearbeitungseinheiten dann (durch den Roboterarm) mit den gleichen Werkstücken versorgt werden (Einfuhr und Abfuhr des Werkstücks durch den Roboterarm 16). Alternativ ist jedoch auch möglich, dass die erfindungsgemäßen Bearbeitungseinheiten 2 unterschiedliche Bearbeitungsschritte durchführen. In diesem Zusammenhang ist es dann besonders bevorzugt, wenn der Roboterarm 16 das Werkstück sequentiell zwischen den verschiedenen Bearbeitungseinheiten 2 durchreicht, wobei durch die erfindungsgemäßen Werkzeugmittel individuell anpassbare Bearbeitungsschritte durchführbar sind.

Aufgrund der vorteilhaft geringen Abmessung der transportablen Werkstück-Bearbeitungsvorrichtung 1 und der erfindungsgemäßen Möglichkeit, die Bearbeitungseinheit 2 von der Ansteuer- und/oder Versorgungseinheit 3 zu trennen, lässt sich somit äußerst flexibel eine bestehende Handhabungsvorrichtung 4 umrüsten und damit weiter nutzen. Zudem bietet die bevorzugte Ausführungsform der Erfindung, in der die Bearbeitungseinheit 2 von zwei Seiten frei zugänglich ausgebildet ist, nicht nur eine einfache Integration, sondern ermöglicht es dabei auch, dass die Bearbeitungsschritte durch eine vorgesehene Bedienperson 20 einfach und in der Verbindungsposition zudem auch auf Augenhöhe, überwacht werden kann. In diesem Zusammenhang ist bei der Sternanordnung vorteilhaft, dass die Bedienperson 20 einen freien Zugang auf die Bearbeitungseinheit 2 hat, ohne dabei in den Wirkbereich des Roboterarms 16 zu gelangen. Gleichzeitig ist auch die Handhabungsvorrichtung 4 in der Sternanordnung durch die frei bleibende Seite frei zugänglich, was neben einem einfachen Zugriff auf die Handhabungsvorrichtung 4 auch den An- und/oder Abtransport von Werkstücken ermöglicht.

### Bezugszeichenliste

- 1: transportable Werkstück-Bearbeitungsvorrichtung
- 2: Bearbeitungseinheit (erste Moduleinheit)
- 3: Ansteuer- und/oder Versorgungseinheit (zweite Moduleinheit)
- 4: Handhabungsvorrichtung
- 5: Versorgungsleitungsmittel
- 6: Logikmittel
- 7: Werkzeugmittel
- 8: Haltemittel (Spannmittel)
- 9: Relativbewegungsmittel
- 10: Display
- 11: Eingabemittel
- 12: Unterplatte
- 13: Dreifußanordnung
- 14: Oberseite
- 15: Roboterzelle
- 16: Roboterarm
- 17: Modulrahmen
- 18: Bohrungen
- 19: Handhabungs- und Bearbeitungssystem
- 20: Bedienperson

- V: Vertikalachse

## Patentansprüche

1. Transportable Werkstück-Bearbeitungsvorrichtung (1), insbesondere Miniatur-Bearbeitungszentrum, umfassend eine Bearbeitungseinheit (2) und eine Ansteuer- und/oder Versorgungseinheit, (3) wobei die Bearbeitungseinheit (2), insbesondere Bohr- und/oder FräsWerkzeuge umfassende, Werkzeugmittel (7) für die Bearbeitung eines mittels, insbesondere Spannmittel umfassenden, Haltemitteln (8) haltbaren Werkstücks in einem Bearbeitungsbereich sowie Relativbewegungsmittel (9) zur Positionierung der Werkzeugmittel (7) und/oder der das Werkstück haltenden Haltemittel (8) innerhalb des Bearbeitungsbereichs aufweist, und wobei die Ansteuer- und/oder Versorgungseinheit (3) Ansteuer- und/oder Versorgungsmittel zum Ansteuern und/oder Versorgen der Bearbeitungseinheit (2) mit elektrischer Energie und/oder mindestens einem Medium aufweist, wobei die Werkstück-Bearbeitungsvorrichtung (1) modular ausgestaltet ist und die Bearbeitungseinheit (2) und die Ansteuer- und/oder Versorgungseinheit (3) jeweils eine Moduleinheit bilden, die über flexible Versorgungsleitungsmittel, (5) bevorzugt umfassend mindestens ein Versorgungskabel und/oder mindestens ein Versorgungsrohr, derart verbunden sind, dass sie sowohl räumlich getrennt voneinander als auch, insbesondere unmittelbar, mechanisch miteinander verbunden miteinander zusammenwirkend betreibbar sind,
**dadurch gekennzeichnet,**
**dass** die Bearbeitungseinheit (2) auf einer Dreifußanordnung (13) zur Realisierung einer Dreipunktauflage angeordnet ist, welche über eine Luftfederung verfügt, und wobei in der Verbindungsposition, durch die Anordnung der Bearbeitungseinheit (2) auf der Ansteuer- und/oder Versorgungseinheit (3),
der Bearbeitungsbereich in einer Höhe, bezogen auf einen Untergrund, welcher die Aufstellfläche bzw. Abstützfläche der Ansteuer- und/oder Versorgungseinheit (3) ausbildet, aus einem Wertebereich zwischen 1200mm und 1500mm, bevorzugt von etwas 1350mm angeordnet ist

2. Transportable Werkstück-Bearbeitungsvorrichtung nach Anspruch 1,
**dadurch gekennzeichnet,**
**dass** die Moduleinheiten zwischen einer Verbindungsposition und einer Trennposition relativ zueinander verstellbar sind, und dass die Moduleinheiten in der Verbindungsposition aufeinander gestapelt sind, derart dass sich Bearbeitungseinheit (2) auf der Ansteuer- und/oder Versorgungseinheit (3) abstützt, und dass die Moduleinheiten in der Trennposition voneinander räumlich getrennt, insbesondere senkrecht zu einer Vertikalerstreckung der Moduleinheiten voneinander beabstandet, angeordnet sind.

3. Transportable Werkstück- Bearbeitungsvorrichtung nach einem der Ansprüche 1 oder 2,
**dadurch gekennzeichnet,**
**dass** die Versorgungsleitungsmittel (5) eine Relativverstellbewegung der Moduleinheiten in einem Bewegungsradius von mindestens 1,5m, vorzugsweise mindestens 2m, bevorzugt mindestens 3m, ganz besonders bevorzugt mindestens 4m zulassend ausgebildet sind.

4. Transportable Werkstück- Bearbeitungsvorrichtung nach einem der vorhergehenden Ansprüche,
**dadurch gekennzeichnet,**
**dass** die Bearbeitungsvorrichtung (1), vorzugsweise in der Ansteuer- und/oder Versorgungseinheit angeordnete, programmierbare, signalleitend mit der Bearbeitungseinheit (2) und/oder den Ansteuer- und/oder Versorgungsmitteln (3) verbundene Logikmittel (6) umfasst und/oder dass die Versorgungsmittel elektrische Netzspannungsanschlussmittel und/oder elektrische, Leistungshalbleiter umfassende Aktorkontrollermittel zum Versorgen elektrischer Motoren, insbesondere Direktantriebe, der Relativbewegungsmittel und/oder der Werkzeugmittel mit einer modulierten und/oder getakteten elektrischen Versorgungsspannung und/oder -strom und/oder einen Druckluftspeicher und/oder einen Druckluftkompressor und/oder einen Kühlmediumspeicher und/oder eine Kühlmediumpumpe und/oder Unterdruckerzeugungsmittel und/oder Schmiermittelversorgungsmitte, insbe sondere druckluftbasierte Minimalschmierungsmittel und/oder dass die Versorgungsleitungsmittel elektrische Versorgungskabel und/oder eine Druckluftversorgungsleitung und/oder eine Unterdruckversorgungsleitung und/oder eine Kühlmediumversorgungsleitung und/oder eine Schmiermittelversorgungsleitung umfassen.

5. Transportable Werkstück-Bearbeitungsvorrichtung nach einem der Ansprüche 2 oder 3,
**dadurch gekennzeichnet,**
**dass** den Moduleinheiten, bevorzugt an mindestens einer der Moduleinheiten fest angeordnete, Verbindungsmittel zugeordnet sind, zum, insbesondere formschlüssigen mechanischen Verbinden der Moduleinheiten in der Verbindungsposition.

6. Transportable Werkstück-Bearbeitungsvorrichtung nach einem der vorherigen Ansprüche,
**dadurch gekennzeichnet,**
**dass** die Bearbeitungseinheit (2) eine Unterplatte (12) aus einem Material, insbesondere einem Steinmaterial, ganz besonders bevorzugt Granit aufweist, wobei die Unterplatte (12) eine Rohdichte, insbesondere nach DIN EN 1936:
2007-02, von mindestens 1500 kg/m³ und/oder ein Mindestgewicht von 200 kg und/oder einen spezifischen Wärmekoeffizienten von mindestens 800 J/(kg K) umfasst.

7. Transportable Werkstück- Bearbeitungsvorrichtung nach Anspruch 6,
**dadurch gekennzeichnet,**
**dass** die Unterplatte (12) an einen Modulrahmen (17) angeordnet ist, an dem Verbindungselemente, insbesondere Bohrungen (18), zum lösbaren Festlegen von Relativerstellmitteln, insbesondere eines Transportkrans, angeordnet sind.

8. Transportable Werkstück- Bearbeitungsvorrichtung nach einem der vorherigen Ansprüche,
**dadurch gekennzeichnet,**
**dass** den Werkzeugmitteln (7) ausschließlich ein Werkzeug oder mehrere Werkzeuge aus der Werkzeuggruppe: Bohrwerkzeug, Fräswerkzeug, Druckmittel, insbesondere 3D-Druckmittel und/oder Tintenstrahldruckmittel, Trennmittel, insbesondere Laser, Wasserstrahlschneiden, mech. Stahl-. bzw. Bolzenschneider, Diamantenschneider, Verbindemittel, insbesondere Schweiß- und/oder Löt- und/oder Klebemittel, Erfassungsmittel, insbesondere 3D-Scanner, und/oder eine Reinigungsdüse und/oder Poliermittel und/oder Schleifmittel und/oder Lackiermittel und/oder zugeordnet sind.

9. Transportable Werkstück- Bearbeitungsvorrichtung nach Anspruch 8,
**dadurch gekennzeichnet,**
**dass** die Werkzeuge der Werkzeuggruppe manuell oder automatisch, über ein Werkzeugmagazin umfassend mindestens zwei Werkzeuge, auswechselbar sind.

10. Transportable Werkstück-Bearbeitungsvorrichtung nach einem der Ansprüche 4 bis 9,
**dadurch gekennzeichnet,**
**dass** an der Bearbeitungseinheit (2) eine signalleitend mit den Logikmitteln (6) verbundene Bedienerschnittstelle, insbesondere ein Display (10) und/oder eine Eingabeeinheit, angeordnet ist/sind

11. Transportable Werkstück-Bearbeitungsvorrichtung nach einem der vorherigen Ansprüche,
dass die Relativbewegungsmittel (9) und/oder die Werkzeugmittel (7) mindestens einen Elektromotor, bevorzugt einen getriebefreien Direktantrieb umfassen, der von den Ansteuer- und/oder Versorgungsmitteln mit einer getakteten Versorgungsspannung und/oder einem modulierten und/oder getaktetem Versorgungsstrom über die Versorgungsleitungsmittel versorgbar ist.

12. Transportable Werkstück-Bearbeitungsvorrichtung nach einem der Ansprüche 4-11,
**dadurch gekennzeichnet,**
**dass** die programmierbaren Logikmittel (6) als Standard rechnergestützte numerische Steuerung, insbesondere in einer Standard CNC-Programmiersprache, programmierbar sind.

13. Handhabungs- und Bearbeitungssystem (19) aufweisend eine Bearbeitungsvorrichtung (1) nach den vorherigen Ansprüchen sowie eine, insbesondere als Industrieroboter umfassende, Handhabungsvorrichtung (4), die ausgebildet und eingerichtet ist für das Zu- und/oder Abführen von zu bearbeitenden und/oder bearbeiteten Werkstücken zu/von der Bearbeitungsvorrichtung (1).

14. Handhabungs- und Bearbeitungssystem nach Anspruch 13,
**dadurch gekennzeichnet,**
**dass** die Moduleinheiten der Bearbeitungsvorrichtung (1) räumlich voneinander getrennt sind, derart, dass die Bearbeitungseinheit (2) im Wirkbereich der Handhabungsvorrichtung (4) und die Ansteuer- und/oder Versorgungseinheit (3) neben und/oder beabstandet von der Bearbeitungseinheit (2), insbesondere außerhalb des Bearbeitungsbereichs der Handhabungsvorrichtung (4), angeordnet ist.

15. Handhabungs- und Bearbeitungssystem nach einem der Ansprüche 13 oder 14
**dadurch gekennzeichnet,**
**dass** die Handhabungsvorrichtung (4) als Industrieroboter mit zugehöriger Roboterzelle realisiert ist, in welche die Bearbeitungseinheit (2) in der Trennposition eingesetzt ist, und dass die Ansteuer- und/oder Versorgungseinheit (3) außerhalb der Roboterzelle (15) angeordnet ist und/oder dass zwei, bevorzugt drei, Bearbeitungseinheiten (2) im Wirkbereich einer, bevorzugt als Industrieroboter, ausgebildeten Handhabungsvorrichtung (4) angeordnet sind.

## Claims

1. A transportable workpiece processing device (1), in particular a miniature processing center, comprising a processing unit (2) and a control and/or supply unit (3),
the processing unit (2) having tool means (7), in particular comprising drilling and/or milling tools, for processing a workpiece in a processing area, the workpiece being retainable by means of retainer means (8), in particular comprising clamping means, and the processing unit (2) comprising relative movement means (9) for positioning the tool means (7) and/or the retainer means (8) retaining the workpiece within the processing area,
and the control and/or supply unit (3) having control and/or supply means for controlling and/or supplying the processing unit (2) by means of/with electrical energy and/or at least one medium,
the workpiece processing device (1) being modular and the processing unit (2) and the control and/or supply unit (3) each forming a module unit, the module units being connected via flexible supply line means (5), preferably comprising at least one supply cable and/or at least one supply pipe, in such a manner that they can be operated interacting with one another both separated from one another and, in particular directly, mechanically connected to one another,
**characterized in that**
the processing unit (2) is arranged on a tripod arrangement (13) for realizing a three-point support which is provided with an air suspension, and wherein, as a result of the arrangement of the processing unit (2) on the control and/or supply unit (3), the processing area is arranged at a height from a value range between 1200 mm and 1500 mm, preferably of approximately 1350 mm, in the connection position in relation to a base which forms the support surface of the control and/or supply unit (3).

2. The transportable workpiece processing device according to claim 1,
**characterized in that**
the module units are displaceable relative to one another between a connection positon and a separation position, and **in that** the module units are stacked on top of one another in the connection position in such a manner that the processing unit (2) is supported on the control and/or supply unit (3), and **in that** the module units are separated from one another in the separation position, in particular spaced apart from one another perpendicular to a vertical extension of the module units.

3. The transportable workpiece processing device according to claim 1 or 2,
**characterized in that**
the supply line means (5) are configured in such a manner that they allow a relative displacement of the module units within a movement range of at least 1.5 m, preferably at least 2 m, more preferably at least 3m, particularly preferably at least 4 m.

4. The transportable workpiece processing device according to any one of the preceding claims,
**characterized in that**
the processing device (1) comprises logic means (6) which are preferably arranged in the control and/or supply unit, which are programmable and which are connected to the processing unit (2) and/or to the control and/or supply means (3) in a signal-conducting manner and/or **in that** the supply means comprise electrical mains-voltage connection means and/or comprise electrical actuator controller means comprising power semiconductors and configured for supplying power to electric motors, in particular direct drives, of the relative movement means and/or of the tool means with a modulated and/or clocked electrical mains voltage and/or current and/or comprise a compressed air storage and/or comprise an air compressor and/or comprise a cooling medium storage and/or comprise a cooling medium pump and/or comprise vacuum generation means and/or comprise lubricant supply means, in particular minimal lubrication means based on compressed air, and/or **in that** the supply line means comprise electric supply cables and/or a compressed air supply line and/or a vacuum supply line and/or a cooling medium supply line and/or a lubricant supply line.

5. The transportable workpiece processing device according to claim 2 or 3,
**characterized in that**
connection means which are preferably fixed to at least one of the module units are assigned to the module units for the, in particular form-fitting, mechanical connection of the module units in the connection position.

6. The transportable workpiece processing device according to any one of the preceding claims,
**characterized in that**
the processing unit (2) has a bottom plate (12) made of a material, in particular a stone material, particularly preferably granite, the bottom plate (12) comprising a bulk density, in particular according to DIN EN 1936:2007-02, of at least 1500 kg/m³ and/or a minimum weight of 200 kg and/or a specific heat coefficient of at least 800 J/(kg K).

7. The transportable workpiece processing device according to claim 6,
**characterized in that**
the bottom plate (12) is arranged on a module frame (17) on which connection elements, in particular bores (18), are arranged for the detachable fixation of relative displacement means, in particular of a transport crane.

8. The transportable workpiece processing device according to any one of the preceding claims,
**characterized in that**
the tool means (7) are assigned exclusively one tool or several tools from the following tool group: drilling tool, milling tool, printing means, in particular 3D printing means and/or inkjet printing means, release agents, in particular laser, water jet cutting, mechanical steel or bolt cutter, diamond cutter, connection means, in particular welding and/or soldering means and/or adhesives, detection means, in particular 3D scanner, and/or a cleaning nozzle and/or polishing agents and/or abrasives and/or painting means.

9. The transportable workpiece processing device according to claim 8,
**characterized in that**
the tools of the tool group can be exchanged manually or automatically via a tool magazine comprising at least two tools.

10. The transportable workpiece processing device according to any one of claims 4 to 9,
**characterized in that**
a user interface, in particular a display (10) and/or an input unit, is/are arranged on the processing unit (2), the user interface being connected to the logic means (6) in a signal-conducting manner.

11. The transportable workpiece processing device according to any one of the preceding claims,
**characterized in that**
the relative movement means (9) and/or the tool means (7) comprise at least one electric motor, preferably a gearless direct drive, which can be supplied with a clocked mains voltage and/or a modulated and/or clocked mains current by the control and/or supply means via the supply line means.

12. The transportable workpiece processing device according to any one of claims 4 to 11,
**characterized in that**
the programmable logic means (6) are programmable as a numerical control based on standard computers, in particular in a standard CNC programming language.

13. A handling and processing system (19) having a processing device (1) according to the preceding claims and a handling device (4), in particular comprising industrial robots, which is realized and configured for the feeding and/or removal of workpieces to be processed and/or processed workpieces to/from the processing device (1).

14. The handling and processing system according to claim 13,
**characterized in that**
the module units of the processing device (1) are separated from one another in such a manner that the processing unit (2) is arranged in the operating area of the handling device (4) and the control and/or supply unit (3) is arranged adjacent to and/or spaced apart from the processing unit (2), in particular outside the processing area of the handling device (4).

15. The handling and processing system according to claim 13 or 14,
**characterized in that**
the handling device (4) is realized as an industrial robot which has a corresponding robot cell (15) into which the processing unit (2) is inserted in the separation position, and **in that** the control and/or supply unit (3) is arranged outside the robot cell (15) and/or **in that** two, preferably three, processing units (2) are arranged in the operating area of a handling device (4) which is preferably configured as an industrial robot.

## Revendications

1. Dispositif (1) de traitement de pièce transportable, notamment un centre de traitement miniature, le dispositif (1) de traitement de pièce transportable comprenant une unité de traitement (2) et une unité de commande et/ou d'alimentation (3), l'unité de traitement (2) ayant des moyens d'outil (7) comprenant notamment des outils de forage et/ou de fraisage pour le traitement d'une pièce dans une zone de traitement, la pièce pouvant être retenue au moyen de moyens de retenue (8) comprenant notamment des moyens de serrage, et l'unité de traitement (2) ayant des moyens de déplacement relatif (9) destinés à positionner les moyens d'outil (7) et/ou les moyens de retenue (8) retenant la pièce dans la zone de traitement,
et l'unité de commande et/ou d'alimentation (3) ayant des moyens de commande et/ou d'alimentation destinés à commander et/ou alimenter l'unité de traitement (2) au moyen d'/en énergie électrique et/ou au moins un milieu, le dispositif (1) de traitement de pièce étant modulaire et l'unité de traitement (2) et l'unité de commande et/ou d'alimentation (3) formant chacune une unité de module, les unités de module étant reliées par des moyens (5) de conduite d'alimentation flexibles comprenant, de préférence, au moins un câble d'alimentation et/ou au moins un tube d'alimentation de telle manière que les unités de module peuvent être fonctionnées en coopération de manière spatialement séparée l'une de l'autre et de manière mécaniquement reliée l'une à l'autre, notamment directement,
**caractérisé en ce que**
l'unité de traitement (2) est disposée sur un arrangement de trépied (13) afin de réaliser un support à trois points qui est pourvu d'une suspension pneumatique, et dans lequel, en raison de la disposition de l'unité de traitement (2) sur l'unité de commande et/ou d'alimentation (3), la zone de traitement est disposée à une hauteur d'une plage de valeurs entre 1200 mm et 1500 mm, de préférence d'environ 1350 mm, dans la position de liaison par rapport à un fond qui forme la surface de support de l'unité de commande et/ou d'alimentation (3).

2. Dispositif de traitement de pièce transportable selon la revendication 1,
**caractérisé en ce que**
les unités de module peuvent être déplacées l'une par rapport à l'autre entre une position de liaison et une position de séparation, et **en ce que** les unités de module sont empilées l'une sur l'autre dans la position de liaison de telle manière que l'unité de traitement (2) est supportée sur l'unité de commande et/ou d'alimentation (3), et **en ce que** les unités de module sont séparées spatialement l'une de l'autre dans la position de séparation, notamment espacées perpendiculairement à une extension verticale des unités de module.

3. Dispositif de traitement de pièce transportable selon la revendication 1 ou la revendication 2,
**caractérisé en ce que**
les moyens (5) de conduite d'alimentation sont configurés de manière à permettre un déplacement relatif des unités de module dans une amplitude de mouvement d'au moins 1,5m, préférentiellement d'au moins 2 m, de préférence d'au moins 3 m, de préférence particulière d'au moins 4 m.

4. Dispositif de traitement de pièce transportable selon l'une quelconque des revendications précédentes,
**caractérisé en ce que**
le dispositif de traitement (1) comprend des moyens de logique (6) qui sont, de préférence, disposés dans l'unité de commande et/ou d'alimentation, qui sont programmables et qui sont reliés à l'unité de traitement (2) et/ou aux moyens de commande et/ou d'alimentation (3) de manière à conduire un signal et/ou **en ce que** les moyens d'alimentation comprennent des moyens de raccordement de tension de réseau électriques et/ou des moyens de contrôle d'actionneur électriques qui comprennent des semi-conducteurs de puissance pour alimenter des moteurs électriques, notamment des entraînements directs, des moyens de déplacement relatif et/ou des moyens d'outil en une tension et/ou courant d'alimentation électrique modulé(e) et/ou synchronisé(e) et/ou un réservoir d'air comprimé et/ou un compresseur d'air comprimé et/ou un réservoir de milieu de refroidissement et/ou une pompe de milieu de refroidissement et/ou des moyens de génération de dépression et/ou des moyens d'alimentation en lubrifiant, notamment des moyens de lubrification minimale à base d'air comprimé et/ou **en ce que** les moyens de conduite d'alimentation comprennent des câbles d'alimentation électriques et/ou une conduite d'alimentation en air comprimé et/ou une conduite d'alimentation en dépression et/ou une conduite d'alimentation en milieu de refroidissement et/ou une conduite d'alimentation en lubrifiant.

5. Dispositif de traitement de pièce transportable selon la revendication 2 ou la revendication 3,
**caractérisé en ce que**
des moyens de liaison qui sont, de préférence, fixés à au moins une des unités de module sont assignés aux unités de module pour la liaison mécanique, notamment par forme, des unités de module dans la position de liaison.

6. Dispositif de traitement de pièce transportable selon l'une quelconque des revendications précédentes,
**caractérisé en ce que**
l'unité de traitement (2) a une plaque inférieure (12) d'un matériau, notamment un matériau en pierre, de préférence granit, la plaque inférieure (12) comprenant une densité apparente, notamment selon DIN EN 1936: 2007-02, d'au moins 1500 kg/m³ et/ou un poids minimal de 200 kg et/ou un coefficient thermique spécifique d'au moins 800 J/(kg K).

7. Dispositif de traitement de pièce transportable selon la revendication 6,
**caractérisé en ce que**
la plaque inférieure (12) est disposée sur un cadre de module (17) sur lequel sont disposés des éléments de liaison, notamment des alésages (18), qui sont destinés à la fixation amovible des moyens de déplacement relatif, notamment d'une grue de transport.

8. Dispositif de traitement de pièce transportable selon l'une quelconque des revendications précédentes,
**caractérisé en ce**
**qu'**exclusivement un outil ou plusieurs outils du groupe d'outils suivant est/sont assigné(s) aux moyens d'outil (7) : outil de forage, outil de fraisage, moyens d'impression, notamment moyens d'impression 3D et/ou moyens d'impression à jet d'encre, moyens de séparation, notamment lasers, outils de découpage au jet d'eau, coupe-aciers ou coupe-boulons mécaniques, coupe-diamants, moyens de liaison, notamment moyens de soudage et/ou de brasage et/ou adhésifs, moyens de détection, notamment scanners 3D, et/ou une buse de nettoyage et/ou moyens de polissage et/ou abrasifs et/ou des moyens de laquage.

9. Dispositif de traitement de pièce transportable selon la revendication 8,
**caractérisé en ce que**
les outils du groupe d'outils peuvent être remplacés de manière manuelle ou automatique par un magasin d'outils comprenant au moins deux outils.

10. Dispositif de traitement de pièce transportable selon l'une quelconque des revendications 4 à 9,
**caractérisé en ce**
**qu'**une interface opérateur, notamment un écran (10) et/ou une unité de saisie est/sont disposé/e/s sur l'unité de traitement (2), l'interface opérateur étant reliée aux moyens de logique (6) de manière à conduire un signal.

11. Dispositif de traitement de pièce transportable selon l'une quelconque des revendications précédentes,
**caractérisé en ce que**
les moyens de déplacement relatif (9) et/ou les moyens d'outil (7) comprennent au moins un moteur électrique, de préférence un entraînement direct sans transmission, qui peut être alimenté par les moyens de commande et/ou d'alimentation en une tension d'alimentation synchronisée et/ou un courant d'alimentation modulé et/ou synchronisé par les moyens de conduite d'alimentation.

12. Dispositif de traitement de pièce transportable selon l'une quelconque des revendications 4 à 11,
**caractérisé en ce que**
les moyens de logique (6) programmables peuvent être programmés comme commande numérique à base d'ordinateur standard, notamment dans un langage de programmation CNC standard.

13. Système (19) de manipulation et de traitement ayant un dispositif de traitement (1) selon l'une quelconque des revendications précédentes et un dispositif de manipulation (4) qui comprend notamment des robots industriels et qui est réalisé et configuré pour la fourniture et/ou l'évacuation de pièces à traiter et/ou traitées au/du dispositif de traitement (1).

14. Système de manipulation et de traitement selon la revendication 13,
**caractérisé en ce que**
les unités de module du dispositif de traitement (1) sont séparées spatialement l'une de l'autre de telle manière que l'unité de traitement (2) est disposée dans la zone de fonctionnement du dispositif de manipulation (4) et l'unité de commande et/ou d'alimentation (3) est adjacente à et/ou espacée de l'unité de traitement (2), notamment en dehors de la zone de traitement du dispositif de manipulation (4).

15. Système de manipulation et de traitement selon la revendication 13 ou la revendication 14,
**caractérisé en ce que**
le dispositif de manipulation (4) est réalisé comme robot industriel qui a une cellule de robot correspondante dans laquelle est insérée l'unité de traitement (2) dans la position de séparation, et **en ce que** l'unité de commande et/ou d'alimentation (3) est disposée en dehors de la cellule de robot (15) et/ou **en ce que** deux, de préférence trois, unités de traitement (2) sont disposées dans la zone de fonctionnement d'un dispositif de manipulation (4) qui est, de préférence, réalisé comme robot industriel.
